(19) Europäisches Patentamt
European Patent Office
Office européen des brevets

(11) **EP 3 583 390 B1**

(12) **EUROPÄISCHE PATENTSCHRIFT**

(45) Veröffentlichungstag und Bekanntmachung des Hinweises auf die Patenterteilung:
**03.11.2021** **Patentblatt 2021/44**

(21) Anmeldenummer: **18833399.1**

(22) Anmeldetag: **11.12.2018**

(51) Int Cl.:
**G01J 1/42** *(2006.01)* **G01J 1/04** *(2006.01)*

(86) Internationale Anmeldenummer:
**PCT/EP2018/084303**

(87) Internationale Veröffentlichungsnummer:
**WO 2019/121145 (27.06.2019 Gazette 2019/26)**

(54) **VERFAHREN UND VORRICHTUNG ZUR ERFASSUNG EINER FOKUSLAGE EINES LASERSTRAHLS**

METHOD AND DEVICE FOR DETECTING A FOCAL POSITION OF A LASER BEAM

PROCÉDÉ ET DISPOSITIF DE DÉTECTION D'UNE POSITION FOCALE D'UN FAISCEAU LASER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.12.2017 DE 102017131224**

(43) Veröffentlichungstag der Anmeldung:
**25.12.2019 Patentblatt 2019/52**

(73) Patentinhaber: **Precitec GmbH & Co. KG**
**76571 Gaggenau-Bad Rotenfels (DE)**

(72) Erfinder:
• **BLÁZQUEZ-SÁNCHEZ, David**
**76571 Gaggenau (DE)**

• **WECKENMANN, Niklas**
**76437 Rastatt (DE)**
• **OPITZ, Florian**
**77654 Offenburg (DE)**
• **SPÖRL, Georg**
**76287 Rheinstetten (DE)**

(74) Vertreter: **Ter Meer Steinmeister & Partner**
**Patentanwälte mbB**
**Nymphenburger Straße 4**
**80335 München (DE)**

(56) Entgegenhaltungen:
EP-A1- 2 952 861 WO-A2-2012/021311
DE-A1-102011 007 176 DE-A1-102015 001 421
DE-C1- 4 426 931 US-A- 5 459 565

## Beschreibung

Die Erfindung betrifft ein Verfahren und eine Vorrichtung zur Erfassung einer Fokuslage eines Laserstrahls, insbesondere eines Bearbeitungslaserstrahls in einem Laserbearbeitungskopf. Derartige Verfahren und Vorrichtungen werden zur Überwachung und Regelung der Fokuslage in einem Laserbearbeitungskopf bei der Lasermaterialbearbeitung eingesetzt.

Ein Problem bei der Lasermaterialbearbeitung ist die sogenannte "thermische Linse" (thermisch induzierte Brechkraftänderung), die auf die Erwärmung von optischen Elementen zur Laserstrahlführung und -fokussierung durch die Laserleistung, insbesondere im Multi-Kilowatt-Bereich und auf die Temperaturabhängigkeit der Brechzahl optischer Gläser zurückzuführen ist. Die thermische Linse führt bei der Lasermaterialbearbeitung zu einer Fokusverschiebung entlang der Strahlausbreitungsrichtung, die sich negativ bei der Bearbeitung eines Werkstücks auswirkt. Zur Sicherstellung der Bearbeitungsqualität ist daher eine Kontrolle über die Fokuslage durch Ihre Vermessung erwünscht. Es ist also erforderlich die jeweilige Fokuslage zu erfassen und die Fokuslagenverschiebung auszugleichen, also eine schnelle und genaue Fokuslagenregelung bereitzustellen.

Zur Bestimmung der Fokuslage eines Laserstrahls sind verschiedene Verfahren und Vorrichtungen bekannt. Das Problem ist die Integration dieser Verfahren und Vorrichtungen in einen Laserbearbeitungskopf, um eine präzise Fokuslagenvermessung in Echtzeit während eines Lasermaterialbearbeitungsprozesses sicherzustellen.

Der internationale Standard ISO 11146 legt Verfahren zur Vermessung von Laserstrahlen, insbesondere Prüfverfahren für Laserstrahlparameter fest. Dabei ist insbesondere angegeben wie Strahlabmessungen wie Strahlbreiten (Durchmesser), Divergenzwinkel, Strahlpropagationsfaktor, Beugungsmaßzahl und Strahlqualität zu messen sind. Zur Bestimmung der Fokuslage, also der Lage des kleinsten Durchmessers des Strahls, wird der Strahldurchmesser an mindestens zehn Stellen längs des Strahlverlaufes bestimmt. Die Änderung des Strahldurchmessers wird in Abhängigkeit von der Strahlausbreitungsrichtung mathematisch mit der so genannte Strahlkaustik beschrieben. Durch Anpassung der gemessenen Strahldurchmesser an die Strahlkaustik werden sowohl die Fokuslage als alle anderen Laserstrahlparametern ermittelt.

Der aktuelle Stand der Technik integriert eine Fokuslagenregelung in einen Lasermaterialbearbeitungskopf, um die Fokuslage in Echtzeit während der Lasermaterialbearbeitung nachzuführen.

Um die Schwankung der Brennpunktlage aufgrund einer thermischen Linse ausgleichen zu können, wird, wie in der JP 2000 094 173 A beschrieben, das Ausmaß der thermischen Linse während der Bearbeitung eines Werkstücks durch Messung der Temperatur einer Linse mit einem Temperatursensor erfasst. Eine Steuervorrichtung treibt dann einen Antriebsmotor an, um eine Linse in Strahlausbreitungsrichtung so zu verschieben, dass die Brennpunktposition korrekt zu einem zu bearbeitenden Werkstücks ausgerichtet ist.

Gemäß der DE 10 2015 106 618 B4 erfolgt eine Fokuslagenregelung aufgrund der Laserleistung unter Verwendung eines entsprechenden Kennfeldes, das die Fokusverschiebung in Abhängigkeit von der Laserleistung beschreibt.

Mit derartigen Verfahren und Vorrichtungen, die ohne die Vermessung der Ist-Fokuslage eine Fokuslageregelung ermöglichen, lässt sich zwar eine Verbesserung in der Bearbeitungsqualität mit minimalem bautechnischen Aufwand erreichen, jedoch lässt sich keine hohe Präzision in die Fokuslagenregelung und deswegen auch keine Bearbeitungsqualität erzielen, die höchsten Qualitätsanforderungen gerecht wird.

Die DE 10 2011 054 941 B3 beschreibt eine Vorrichtung zur Korrektur der thermisch bedingten Verschiebung der Fokuslage. Die Vorrichtung ist mit einem Sensor zur Ermittlung der aktuellen Fokuslage der Laserstrahlen, einer Recheneinheit zum Vergleichen der aktuellen Fokuslage mit einer Soll-Fokuslage und zum Ausgeben von Korrekturdaten an eine Korrektureinheit ausgestattet, die wenigstens ein optisches Element zum Nachstellen der Fokuslage gemäß den Korrekturdaten verändert. Hierzu wird ein Rückreflex des Laserstrahls am Schutzglas über die Fokussierlinsen für den Laserstrahl und ein Objektiv auf den Sensor abgebildet, der am Ort des Fokus angeordnet ist. Hier ist die Rückabbildung durch die Fokussierlinsen mit teilweise erheblichen Abbildungsfehlern behaftet, was die Genauigkeit der Messung und damit der Fokuslagenregelung beeinträchtigt.

Die DE 10 2011 007 176 A1 beschreibt eine Vorrichtung zur Fokussierung eines Laserstrahls auf ein Werkstück, die mindestens ein transmissives optisches Element, das bezüglich einer Ebene senkrecht zur Strahlachse des Laserstrahls unter einem Kippwinkel angeordnet ist, und einen ortsauflösenden Detektor zur Erfassung von an dem transmissiven optischen Element rückreflektierter Laserstrahlung umfasst. Aus dem vom Detektor, z.B. einem CCD-Chip erfassten Bild wird von einer Bildauswerteeinrichtung die Größe oder der Durchmesser der rückreflektierte Laserstrahlung auf dem Detektor ermittelt, aus der bzw. dem wiederum zur Fokuslagenregelung die Fokusposition bestimmt werden kann.

Hier wird also mit größerem bautechnischen Aufwand die Fokuslage bestimmt. Dafür wird ein Bruchteil des zu vermessenden Laserstrahls ausgekoppelt und am Ort des Fokus und senkrecht zur Strahlausbreitungsrichtung von einer Sensoreinheit ausgewertet. Tritt bei solchen Vorrichtungen durch eine thermische Linse eine Änderung der Fokuslage auf, so erfasst der Fokuslagesensor eine Änderung des Strahldurchmessers. Eine dem Fokuslagesensor nachgeschaltete Recheneinheit der Sensoreinheit ermittelt dann eine Ist-Fokuslage durch einen Vergleich des gemessenen Strahldurchmessers und mit einer bekannten Strahlkaustik des Laserstrahl, die durch eine Referenzmessung bestimmt wurde. Die thermische Linse führt nicht nur zu einer Fokusverschiebung, sondern auch aufgrund von Abbildungsfehlern zu einer Verschlechterung der Strahlqualität. Dies hat eine Änderung der gesamten Strahlkaustik, also auch des Fokusdurchmessers zur Folge. Die Ermittlung der Fokuslage durch einen Vergleich mit Referenzwerten ist daher nicht sehr genau.

Die DE 196 30 607 C1 beschreibt eine Vorrichtung zum Überwachen der Energie eines Laserstrahls. Durch Schrägstellung eines Fensters in Bezug auf die Achse des Laserstrahls wird ein Teil aus dem Laserstrahl ausgekoppelt und auf einen Detektor gerichtet. Der Detektor ist dabei in einer Bildebene einer den Laserstrahl auf ein Substrat abbildenden Optik angeordnet, die der Oberfläche des Substrats entspricht.

Ferner ist aus der DE 10 2010 039 633 A1 eine Vorrichtung zur Bestimmung der Fokuslage eines zur Lasermaterialbearbeitung verwendeten fokussierten Laserstrahls entlang der Laserstrahlachse bekannt, die Folgendes umfasst: eine Selektionseinrichtung mit einem zu der Laserstrahlachse beabstandet angeordneten Selektionselement zum Selektieren eines unter genau einem Winkel zur Laserstrahlachse verlaufenden Teilstrahls des fokussierten Laserstrahls, eine Detektionseinrichtung, die ein von der Laserstrahlachse beabstandet im Strahlengang des selektierten Teilstrahls angeordnetes Sensorelement zum Detektieren der Intensität des selektierten Teilstrahls aufweist, sowie eine Auswerteeinrichtung zum Bestimmen der Fokuslage des Laserstrahl. Die Vorrichtung detektiert dabei das Maximum der Intensität des selektierten Teilstrahls, wenn die Fokuslage des Laserstrahls mit einer Referenz-Fokusposition der Vorrichtung übereinstimmt. Hier wird also nur ein geometrischer Bruchteil des Laserstrahls, nämlich die Randstrahlen für die Fokuslagenvermessung verwendet.

Die thermische Linse hat ihre Ursache in einem thermischen Gradienten entlang der radialen Richtung der optischen Komponenten. Wegen der radialen Laserleistungsverteilung ist die Temperatur und somit die Brechungsindexänderung in der Mitte der Optiken deutlich stärker als am Rand. Wird nur ein Bruchteil des Laserstrahls vermessen, geht Information über die thermische Linse verloren und es ist nicht möglich ihren Einfluss auf die Fokuslage präzise zu ermitteln. Bei einer sehr ausgeprägten thermischen Linse ist eine sphärische Aberration zu erwarten. Die Randstrahlen und die achsnahen Strahlen treffen sich also wegen der unterschiedlichen Temperaturen am Rand und in der Mitte der optischen Komponenten nicht im gleichen Fokus. Zudem ist der Leistungsanteil von Randstrahlen kleiner als der der achsnahen Strahlen. Wird die Fokuslage nur mit der Information der Randstrahlen ermittelt ist also auch nur eine geringe Genauigkeit der Messung zu erwarten.

Die US 8,988,673 B2 beschreibt eine Vorrichtung zur Charakterisierung von Laserstrahlen unter Verwendung von Messungen an gestreutem Licht des Laserstrahls. Die Systeme verwenden Rayleigh-Streuung aus dem Laserstrahl, der durch die Umgebungsluft läuft, so dass keine speziellen Streukammern oder Flüssigkeiten für die Messungen erforderlich sind. Spezielle Auslöschalgorithmen oder -filter werden verwendet, um das gestreute Licht von Staubteilchen zu unterscheiden.

Die DE 10 2015 001 421 A1 zeigt eine Vorrichtung zur Strahldiagnose an Laserbearbeitungs-Optiken mit einem im zum Fokus hin konvergierenden Laserstrahl angeordneten optischen Element zum Zurückreflektieren eines Strahlanteils in das optische System. Ein Teil des in das optische System zurückreflektierten Strahlanteils wird nach der Kollimation mittels einer Einrichtung zur Auskopplung, einem gering reflektierenden Strahlteiler ausgekoppelt und auf eine Strahldiagnose-Einrichtung gelenkt. In der Strahldiagnose-Einrichtung wird die ausgekoppelte Strahlung von einer Einrichtung zur Fokussierung auf einen ortsauflösenden Sensor fokussiert und formt auf dem ortsauflösenden Sensor ein Bild des Laserstrahl-Fokus, das zur Erfassung von Strahleigenschaften des rückreflektierten Strahlanteils im Bereich eines Bildes des Laserstrahlfokus vermessen werden kann. Da der LaserstrahlFokus im Bearbeitungs-Bereich und sein Bild auf dem ortsauflösenden Sensor in einem definiertem Abbildungsverhältnis stehen, kann aus der Vermessung des Bildes des Laserstrahlfokus auf Parameter des Laserstrahls in der Bearbeitungsebene zurückgerechnet werden.

Die US 5 459 565 A betrifft einen Laserstrahlanalysierer, der eine Linse für den Eingangsstrahl, einen Retroreflektor und einen Messkopf aufweist. Der von der Linse fokussierte Laserstrahl wird entlang eines optischen Weges zum Retroreflektor geführt, dort zwei Mal umgelenkt und so auf den Messkopf gerichtet. Um den optischen Weg zwischen der Linse und dem Messkopf zu verlängern, kann der Retroreflektor von einem Schrittmotor auf einer Schiene verschoben werden.

Die WO 2012/021311 A2 betrifft Beleuchtungen für Inspektionssysteme, wie Inspektionssysteme zur Untersuchung von Halbleiter-Wafern und Fotomasken und insbesondere eine frequenzkonvertierte Lichtquelle. Ein Lasersystem umfasst eine Laserquelle, ein Strahlprobenentnahmesystem, das mit der Laserquelle verbunden ist, ein Strahldiagnosesystem, das mit dem Strahlprobenentnahmesystem verbunden ist und ein Strahlkorrektursystem, das wiederum mit dem Strahldiagnosesystem verbunden ist. Als Strahlprobenentnahmesystem ist ein teildurchlässiger Spiegel dargestellt, der das eingestrahlte Licht im Wesentlichen reflektiert und einen Teil als transmittiertes Licht durchlässt. Als Strahldiagnose ist ein $M^2$-Messsystem schematisch dargestellt, das eine Fokussierlinse aufweist. Die Fokussierlinse empfängt das Licht, das von dem Strahlprobenentnahmesystem dem Strahldiagnosesystem zur Verfügung gestellt wird. Das empfangene Licht wird durch die Fokussierlinse des Diagnosesystems fokussiert, sodass im Fokus eine Strahltaille gebildet wird. Das Diagnosesystem ist ausgebildet, um ein Strahlprofil des fokussierten Lichts an verschiedenen Orten entlang eines axialen Abtastbereichs zu messen. Dabei kann die Fokuslage in der horizontalen und der vertikalen Richtung, also quer zur Strahlrichtung ermittelt werden, um die Strahlqualität zu berechnen.

Die DE 44 26 931 C1 betrifft einen thermoelektrischen Detektor zur ortsaufgelösten Detektion von kontinuierlicher und gepulster Strahlung.

Die EP 2 952 861 A1 beschreibt eine Vorrichtung zur Einzelschussmessung des $M^2$ Parameters eines Laserstrahls mit einem Spiegelsystem, das den Laserstrahl von einer Laserstrahlquelle zu einem Fokussiersystem leitet, durch das der Laserstrahl in einen Körper eingestrahlt wird, um den Strahl für einen Fotodetektor sichtbar zu machen. Dieser Körper ist ein teilweise angeschnittener und polierter Stab aus Borosilikatglas, das mit $Yb^{3}+$ dotiert ist. Er kann aber auch zum Beispiel ein Einkristall dotiert mit Samarium-Ionen Sm:YAG sein. Zur Bewertung des Strahls ist der Fotodetektor an eine Bewertungseinheit angeschlossen. Davon ausgehend liegt der Erfindung die Aufgabe zugrunde, ein Verfahren und eine Vorrichtung zur genauen Erfassung einer Fokuslage eines Bearbeitungslaserstrahls während der Lasermaterialbearbeitung in Echtzeit bereitzustellen, das bzw. die sich in bautechnisch kompakter Weise in einen Laserbearbeitungskopf integrieren lässt, um so eine präzise Regelung der Fokuslage während eines Bearbeitungsprozesses zu ermöglichen.

Diese Aufgabe wird durch den Gegenstand der unabhängigen Ansprüche gelöst. Gemäß einer Ausgestaltung der vorliegenden Offenbarung weist eine Vorrichtung zur Erfassung einer Fokuslage eines Laserstrahls, insbesondere eines Bearbeitungslaserstrahls in einem Laserbearbeitungskopf ein im zum Fokus hin konvergierenden Laserstrahl angeordnetes optisches Element zum Auskoppeln zumindest eines Rückreflexes aus dem Laserstrahlengang, und eine Sensoranordnung zur Erfassung von Strahleigenschaften des Laserstrahls im Bereich des Fokus entlang seiner Ausbreitungsrichtung auf, die den ausgekoppelten Reflex des Laserstrahls zur Bestimmung der aktuellen Fokuslage an mindestens zwei entlang der Ausbreitungsrichtung zueinander versetzten Orten vermisst. Um die Fokuslage eines Arbeitslaserstrahls während eines Laserbearbeitungsprozesses in Echtzeit präzise zu ermitteln, wird also in einem ersten Schritt ein Teilstrahl des Arbeitslaserstrahls aus dem Laserstrahlverlauf ausgekoppelt, so dass Abbildungsfehler und thermische Effekte auf den ausgekoppelten Teilstrahl oder Rückreflex vernachlässigbar sind. In einem zweiten Schritt wird die Fokuslage des Teilstrahls und damit auch die Fokuslage des Arbeitslaserstrahls mit Hilfe eines Sensors oder Detektors durch Auswertung von gemessenen Strahleigenschaften entlang der Strahlausbreitungsrichtung ermittelt, wobei der gesamte_Strahl, also der Arbeitslaserstrahl über seinen gesamten Querschnitt zur Fokuslagenbestimmung genutzt wird.

Zweckmäßiger Weise kann vorgesehen sein, dass die Sensoranordnung zumindest einen ortsauflösenden Detektor aufweist, der bevorzugt entlang einer Strahlausbreitungsrichtung des Rückreflexes verschiebbar angeordnet ist. Auf diese Weise kann der Rückreflex und damit der Bearbeitungslaserstrahl, den er repräsentiert, an einer Vielzahl von Orten vermessen werden, so dass nicht nur eine Fokuslagenkontrolle und -korrektur in Echtzeit möglich ist, sondern auch eine Strahldiagnose nach ISO 11146. Das bedeutet dass dafür kein zusätzliches Labormessgerät für die Ausgangskontrolle notwendig ist.

Bei einer alternativen Ausgestaltung der vorliegenden Offenbarung ist vorgesehen, dass der aus dem Laserstrahlengang ausgekoppelte Rückreflex mittels eines Umlenkelements auf den ortsauflösenden Detektor lenkbar ist, das entlang der Strahlausbreitungsrichtung des Rückreflexes verschiebbar angeordnet ist. Hierdurch werden kürzere Verschiebewege bei gleichem Messbereich ermöglicht.

Eine andere Ausgestaltung der vorliegenden Offenbarung zeichnet sich dadurch aus, dass der ortsauflösende Detektor gegen die Strahlausbreitungsrichtung des Rückreflexes geneigt angeordnet ist. Zur Vergrößerung der möglichen Messstellen entlang der Strahlausbreitungsrichtung ist der ortsauflösende Detektor in eine Mehrzahl von gegen die Strahlausbreitungsrichtung des Rückreflexes geneigten Stellungen bewegbar.

Bei einer weiteren Ausgestaltung der vorliegenden Offenbarung, die eine besonders einfache Auswertung der Messdaten ermöglicht, ist vorgesehen, dass die Sensoranordnung einen nicht-ortsauflösenden Sensor oder Detektor, insbesondere einen Leistungsdetektor, vorzugsweise eine Fotodiode aufweist, deren Position in Ausbreitungsrichtung des Rückreflexes 30 relativ dazu veränderbar ist, um die Intensität des Rückreflexes nahe seiner Strahlachse an verschiedenen Orten zu messen.

Um eine mechanisch einfache Einbettung der Vorrichtung zur Erfassung einer Fokuslage in einen Laserbearbeitungskopf zu ermöglichen, kann es zweckmäßig sein, wenn der oder die ausgekoppelten Rückreflexe mittels einer Umlenkeinheit in eine Vielzahl von Teil-Rückreflexen aufgeteilt werden, deren optische Wege von der letzten Fläche einer Fokussieroptik zu einem Sensor oder Detektor der Sensoranordnung von einander verschieden sind. Dabei kann das Umlenkelement aus einer oder mehreren Planplatten bestehen, so dass mit Hilfe mehrerer Flächen gleichzeitige eine Vielzahl von Rückreflexen auf den Sensor oder Detektor der Sensoranordnung gelenkt werden kann, von denen jeder einem Ort auf der Strahlachse zugeordnet ist.

Zweckmäßigerweise kann auch hier der Sensor oder Detektor der Sensoranordnung ein ortsauflösender Sensor sein, der ein CCD, insbesondere ein Kamerasensor oder ein Zeilensensor ist, dessen Ausrichtung der Strahlausbreitungsrichtung des oder der aufgeteilten Rückreflexe entspricht.

Bei einer anderen Ausgestaltung der vorliegenden Offenbarung ist vorgesehen, dass der ausgekoppelte Rückreflex von wenigstens einem Strahlteiler in zumindest zwei Teilrückreflexe aufgeteilt und auf zumindest zwei Sensoren oder Detektoren der Sensoranordnung gelenkt wird.

Alternativ dazu kann auch vorgesehen sein, dass die Sensoranordnung ein Streumedium umfasst, das entlang einer optischen Achse des Rückreflexes angeordnet ist, wobei zur Beobachtung der Strahlkaustik vom Rückreflex ausgehendes Streulicht mit Hilfe einer Abbildungsoptik auf einen Detektor abbildbar ist.

Gemäß einer Ausgestaltung gemäß der vorliegenden Offenbarung zeichnet sich ein Verfahren zur Erfassung einer Fokuslage eines Laserstrahls, insbesondere eines Bearbeitungslaserstrahls in einem Laserbearbeitungskopf, durch folgende Schritte aus: Auskoppeln zumindest eines Rückreflexes aus dem Laserstrahlengang mittels eines im zum Fokus hin konvergierenden Laserstrahl angeordneten optischen Elements, Erfassen von Strahleigenschaften des Laserstrahls im Bereich des Fokus entlang seiner Ausbreitungsrichtung mittels einer Sensoranordnung, und Vermessen des ausgekoppelten Rückreflexes des Laserstrahls zur Bestimmung der aktuellen Fokuslage an mindestens zwei entlang der Ausbreitungsrichtung zueinander versetzten Orten.

Dabei wird als Strahleigenschaft des Laserstrahls die Intensität des Rückreflexes nahe seiner Strahlachse, sein Strahldurchmesser oder von ihm ausgehendes Streulicht zur Beobachtung der Strahlkaustik erfasst und vermessen.

Um den Strahldurchmesser des Rückreflexes an einer Mehrzahl von entlang seiner Ausbreitungsrichtung zueinander versetzten Orten zu erfassen oder zu vermessen, ist vorgesehen, dass ein ortsauflösender Detektor in eine Mehrzahl von gegen die Strahlausbreitungsrichtung des Rückreflexes geneigten Stellungen bewegt wird.

Um die Strahleigenschaft gleichzeitig an einer Vielzahl von Orten entlang der Strahlausbreitungsrichtung erfassen und oder vermessen zu können, kann es zweckmäßigerweise vorgesehen sein, dass der oder die ausgekoppelten Rückreflexe mittels einer Umlenkeinheit in eine Vielzahl von Teilrückreflexen aufgeteilt werden, deren optische Wege von der letzten Fläche einer Fokussieroptik zu einem Sensor oder Detektor der Sensoranordnung von einander verschieden sind, so dass jedem der Vielzahl von Rückreflexen ein anderer Ort auf der Strahlachse zugeordnet ist.

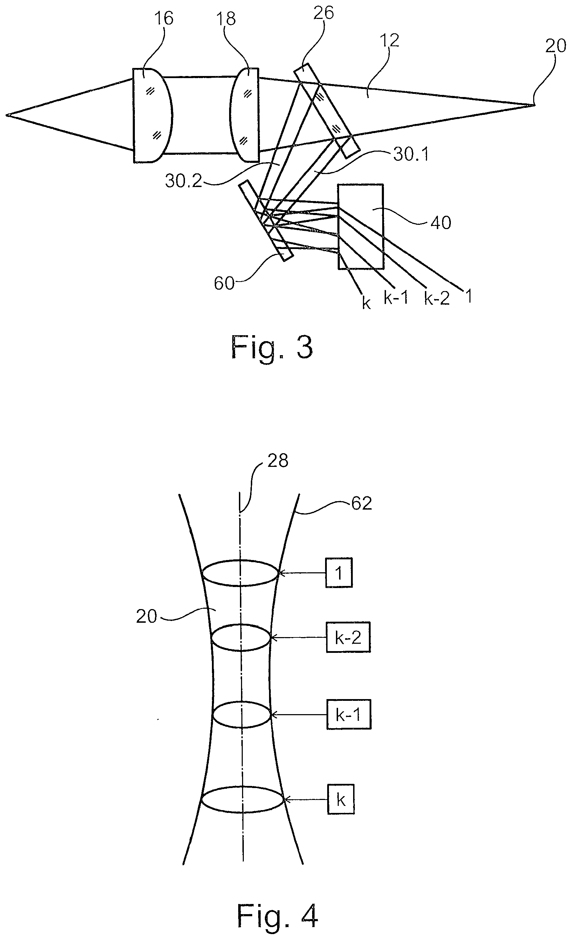

Ausgestaltungen der vorliegenden Offenbarung werden im Folgenden anhand der Zeichnung näher erläutert. Bei den Ausgestaltungen, die anhand der Figuren 3 bis 7 und Figuren 11 bis 13 beschrieben sind, handelt es sich nicht um Ausführungsformen der Erfindung, sondern um Beispiele, die das Verständnis der Erfindung erleichtern. Es zeigen:

Figur 1 eine schematische vereinfachte Darstellung eines Laserbearbeitungskopfes mit einer Vorrichtung gemäß einer Ausgestaltung zur Erfassung einer Fokuslage eines Bearbeitungslaserstrahls in einem Laserbearbeitungskopf bei der Lasermaterialbearbeitung,

Figur 2 eine vereinfachte Darstellung der Strahlführungsoptik eines Laserbearbeitungskopfes mit einer schematischen Darstellung einer Sensoranordnung zur Fokuslagenkontrolle oder -vermessung,

Figur 3 eine schematische Darstellung der Strahlführungsoptik nach Figur 2 mit einer Sensoranordnung zur Fokuslagenkontrolle gemäß einer Ausgestaltung,

Figur 4 einen Verlauf einer Laserstrahlkaustik im Bereich des Laserfokus,

Figuren 5 bis 7 jeweils eine schematische Darstellung der Strahlführungsoptik nach Figur 2 mit einer Sensoranordnung zur Fokuslagenkontrolle gemäß verschiedenen Ausgestaltungen,

Figur 8 eine schematische Darstellung der Strahlführungsoptik nach Figur 2 mit einer Sensoranordnung gemäß einer weiteren Ausgestaltung, deren ortsauflösender Sensor unter einem definierten Winkel $\alpha$ zur Strahlausbreitungsrichtung angeordnet ist,

Figuren 9a und 9b jeweils einen schematischen Schnitt durch eine Laserstrahlkaustik zur Veranschaulichung der schrägen Anordnung des ortsauflösenden Sensors gemäß Figur 8,

Figur 9c eine schematische Darstellung der Sensorebene des ortsauflösenden Sensors gemäß Figur 8,

Figur 10 einen schematischen Schnitt durch eine Laserstrahlkaustik ähnlich Figur 9a zur Veranschaulichung der Vermessung einer Strahlkaustik bei einem definierten Kippwinkel zur Erfassung von mehreren Strahldurchmessern entlang der Strahlausbreitungsrichtung, und

Figur 11 bis 13 jeweils eine schematische Darstellung der Strahlführungsoptik nach Figur 2 mit einer Sensoranordnung zur Fokuslagenkontrolle gemäß weiteren Ausgestaltungen.

In den verschiedenen Figuren der Zeichnung sind einander entsprechende Elemente mit gleichen Bezugszeichen versehen.

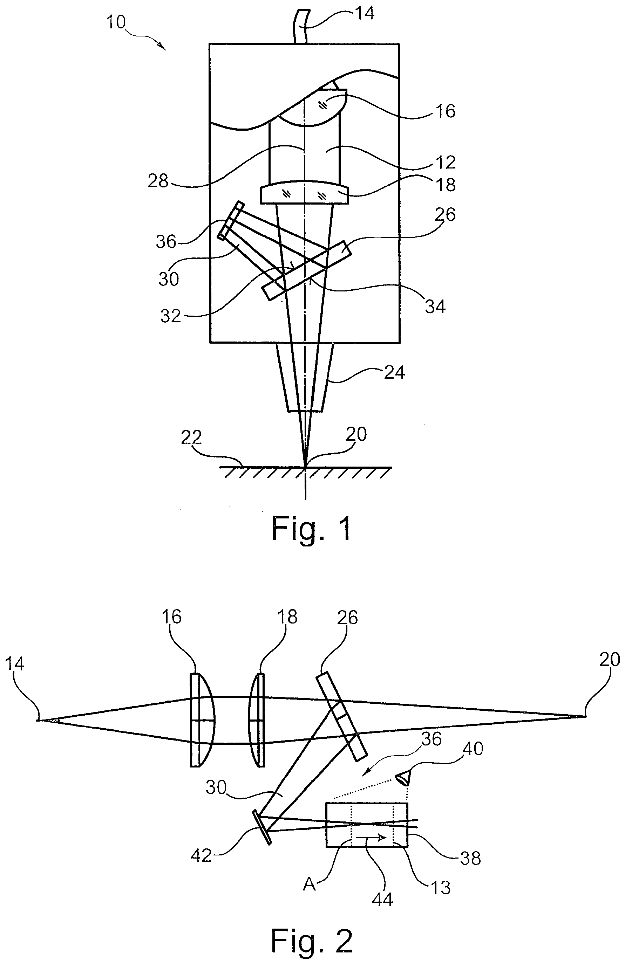

Figur 1 zeigt schematisch einen Laserbearbeitungskopf 10 durch den ein Bearbeitungslaserstrahl 12 geführt ist. Das Bearbeitungslaserlicht wird beispielsweise über eine Lichtleitfaser 14 an den Laserbearbeitungskopf 10 geliefert. Der aus der Lichtleitfaser 14 austretende Bearbeitungslaserstrahl 12 wird von einer ersten Optik 16 kollimiert und von einer Fokussieroptik 18 in einen Laserfokus 20 auf einem Werkstück 22 fokussiert. Zwischen der Fokussieroptik 18 und einer Strahldüse 24, durch die der konvergente Bearbeitungslaserstrahl 12 auf das Werkstück 22 fokussiert wird, ist üblicherweise ein Schutzglas 26 angeordnet, das das Innere des Laserbearbeitungskopfes 10 und insbesondere die Fokussieroptik 18 vor Verschmutzungen schützen soll, die z.B. durch Spritzer oder Schmauch verursacht werden können.

Die erste Optik 16 und die Fokussieroptik 18 sind als Einzellinsen dargestellt, können aber auch in bekannter Weise Linsengruppen sein. Insbesondere die erste Optik 16 kann von beweglichen Linsen eines Zoomsystems gebildet sein, die den Bearbeitungslaserstrahl 12 kollimieren.

Um einen oder mehrere Rückreflexe 30 für eine Fokuslagenvermessung oder -kontrolle aus dem Bearbeitungslaserstrahlengang auszukoppeln, ist das Schutzglas 26 so gegenüber der optischen Achse 28 der Strahlführungsoptik geneigt, dass der Winkel zwischen der optischen Achse 28 und den brechenden und reflektierenden Flächen 32, 34 des Schutzglases 26 von 90° verschieden ist. Wie in Figur 1 schematisch dargestellt ist, werden die Rückreflexe 30 auf eine Sensoranordnung 36 gelenkt. Die Sensoranordnung 36 kann einen ortsauflösenden Sensor oder einen nicht-ortsauflösenden Sensor aufweisen, wie im Folgenden anhand verschiedener Ausgestaltungen näher erläutert wird.

Wie in Figur 2 schematisch dargestellt ist, wird zur Strahlvermessung zumindest ein Rückreflex von einem optischen Element der Strahlführungsoptik, z. B. der Rückreflex 30 von der letzten transparenten optischen Fläche vor dem Laserbearbeitungsprozess aus dem Arbeitslaserstrahlengang ausgekoppelt. Dafür ist beispielsweise das letzte Schutzglas 26 schräg zur optischen Achse angeordnet. Es kann jedoch auch ein anderes (hier nicht dargestelltes) im konvergenten Arbeitslaserstrahlengang angeordnetes optisches Element zum Auskoppeln des Rückreflexes 30 genutzt werden. Ein Schutzglas 26 mit einer erhöhten Dicke wird vorteilhafter Weise verwendet, um die beiden in Figur 1 angedeuteten Rückreflexe 30 von beiden Seiten des Schutzglases 26 zu trennen. Vorzugsweise wird der ausgekoppelte Rückreflex 30 von der letzten transparenten optischen Fläche mit Hilfe der Sensoranordnung 36 vermessen. Die Strahlvermessung findet also getrennt vom Bearbeitungslaserstrahlgang statt.

Um die Lage des Laserfokus 20 in Echtzeit zu ermitteln, werden mit Hilfe der Sensoranordnung 36 die Strahleigenschaften des Bearbeitungslaserstrahls 12 entlang der Strahlausbreitungsrichtung ausgewertet, wobei der Rückreflex 30 dem gesamten Laserstrahl entspricht.

Eine erste Möglichkeit ist die Ermittlung der Strahlkaustik. Dieses hat den Vorteil dass alle möglichen Änderungen des Bearbeitungslaserstrahls aufgrund einer thermische Linse überwacht werden können. Eine zweite Möglichkeit ist die Feststellung der maximalen Laserintensität entlang der Strahlausbreitungsrichtung. Dabei wird auf die Überwachung von anderen Strahleigenschaften verzichtet, während die Fokuslage trotzdem in Echtzeit erfasst werden kann.

Zur Einstellung einer Fokuslage und zur Fokuslagenkorrektur ist zumindest eines der abbildenden optischen Elemente der Stahlführungsoptik, also im dargestellten Beispiel die erste Optik 16 und/oder die Fokussieroptik 18 in Richtung ihrer optischen Achse 28 beweglich angeordnet, so dass sie von einem geeigneten Stellantrieb (nicht dargestellt) bewegt werden können, um eine Fokuslagenkorrektur durchzuführen. Um aufgrund einer erfassten Fokuslagenverschiebung eine Fokuslagenkorrektur durchzuführen, wird ein Ausgangssignal der Sensoranordnung 36 an eine Auswerteschaltung (nicht dargestellt) geliefert, die aus dem Ausgangssignal der Sensoranordnung 36 die aktuelle Fokusposition oder -lage bestimmt und ein Stellsignal für den Stellantrieb ausgibt, so dass zumindest ein optisches Element, zum Beispiel die erste Optik 16 entsprechend verschoben wird.

Der aus dem Bearbeitungslaserstrahl 12 ausgekoppelte Rückreflex 30 wird in einen Messbereich 38 eines Sensors oder Detektors 40 der Sensoranordnung 36 gelenkt, in dem die Laserleistung keinen messbaren thermischen Einfluss mehr hat. Hierbei kann ein Umlenkspiegel 42 vorgesehen sein, wie beispielsweise in Figur 2 dargestellt. Zur Ermittlung der Fokuslage in Echtzeit vermisst der Sensor oder Detektor 40 Eigenschaften des Bearbeitungslaserstrahls entlang seiner Strahlausbreitungsrichtung 44. Insbesondere werden Strahleigenschaften in mindestens zwei unterschiedlichen Ebenen A, B senkrecht zur Strahlausbreitungsrichtung 44 gemessen.

Wie in Figur 3 dargestellt ist, werden beispielsweis die beiden Rückreflexe 30.1, 30.2 von dem letzten optischen Element der Stahlführungsoptik vor dem Laserprozess, also von dem Schutzglas 26 zur Fokuslagenvermessung genutzt, um den Bearbeitungslaserstrahl an mehreren Positionen entlang der Strahlausbreitungsrichtung 44 zu vermessen, und mit einem weiteren transparenten optischen Element, einem Umlenkelement 60 auf einen ortsauflösenden Sensor oder Detektor 40 umgelenkt. Als ortsauflösenden Sensor oder Detektor 40 kann jeder Sensor eingesetzt werden, mit dem ein Durchmesser des auf den Sensor auftreffenden Laserstrahls, also des Laserrückreflexes zur Stahlvermessung ermittelt werden kann. Zweckmäßigerweise wird jedoch als ortsauflösender Sensor oder Detektor 40 eine Kamera eingesetzt, deren Sensorfläche beispielsweise von einem CCD-Sensor gebildet wird.

Als Umlenkelement 60 kann eine planparallele Platte vorgesehen sein. Es ist aber auch möglich eine Keilplatte als Umlenkelement 60, Schutzglas 26 oder als weiteres Umlenkelement zu verwenden, um die Auftreffpunkte oder -bereiche der einzelnen Teilrückreflexe auf dem ortsauflösenden Sensor 40, also auf dessen Sensorfläche weiter von einander zu trennen. Ferner ist möglich, die hintere Fläche des Umlenkelements 60 zu verspiegeln, um Lichtverluste für die entsprechenden Rückreflexe zu vermeiden. Dabei ist es auch denkbar, die vordere Fläche des Umlenkelements 60 mit einer Beschichtung zu versehen, so dass die Intensität der beiden einfallenden Rückreflexe 30.1 und 30.2 gleichmäßig auf die jeweiligen Teilrückreflexe verteilt wird.

Durch die auf diese Weise erzeugten mehrfach Rückreflexe lässt sich also der Bearbeitungslaserstrahl, insbesondere sein Strahldurchmesser im Bereich des Fokus an mehreren Stellen vermessen, da der optische Weg des Lichts von letzten Fläche der Fokussieroptik 18 bis zur Sensorfläche des ortsauflösenden Sensors oder Detektor 40 für jeden der Rückreflexe unterschiedlich ist, also teilweise kürzer und teilweise länger als die nominale Brennweite, die die Fokuslage bestimmt.

Wie in Figur 3 dargestellt ist, treffen die vier Rückreflexe, die aus den beiden Rückreflexen 30 vom Schutzglas 26 durch die mehrfach Reflektion an den Umlenkelement 60 entstehen, an den Stellen 1, k-2, k-1 und k auf. Die von dem ortauflösenden Sensor 40 an diesen Bereichen seiner Sensorfläche ermittelten Stahldurchmesser sind in Figur 4 schematisch dargestellt. Es zeigt sich also, dass an den Bereichen 1 und k-2 Strahldurchmesser erfasst werden, die vor dem Fokus 20 liegen während in den Bereichen k-1 und k Stahldurchmesser an Stellen erfasst werden, die hinter dem Fokus 20 liegen. Durch die Vermessung mehrerer Stahldurchmesser entlang der Strahlausbreitungsrichtung im Bereich des nominellen Fokus 20 ist es möglich, die Stahlkaustik 62 näherungsweise zu ermitteln, um dann aus der Stahlkaustik 62 die reale Fokuslage des Bearbeitungslaserstrahls 12 zu bestimmen.

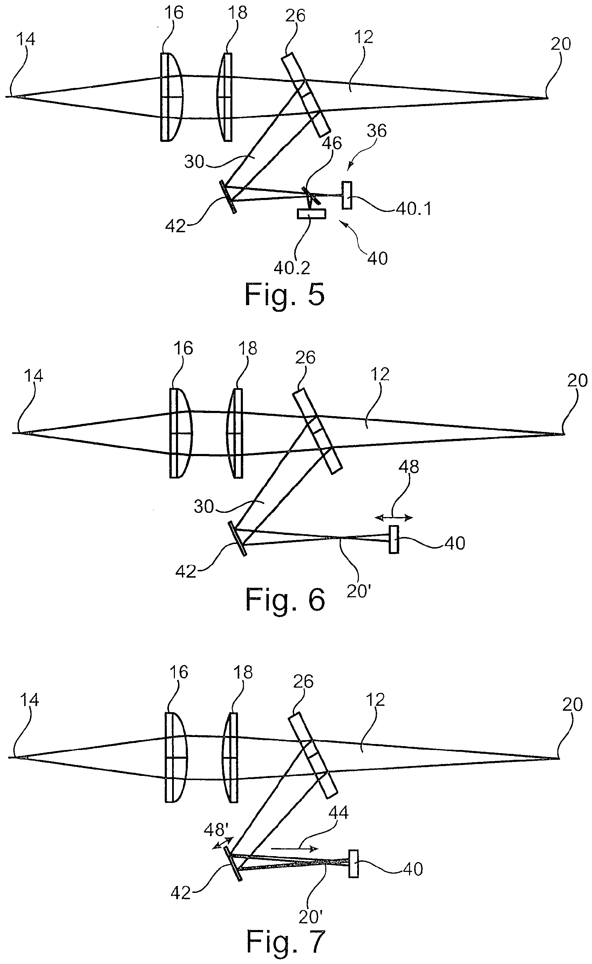

Wie in Figur 5 dargestellt ist, wird der zu vermessende Rückreflex 30 mit (mindestens) einem Strahlteiler 46 in (mindestens) zwei Strahlen aufgeteilt und zur Vermessung der Strahleigenschaften an (zumindest) zwei Positionen entlang der Strahlausbreitungsrichtung 44 auf (mindestens) zwei zugeordnete ortsauflösende Sensoren oder Detektoren 40.1 und 40.2 der Sensoranordnung 36 gelenkt. Die Detektoren 40.1 und 40.2 sind senkrecht zur Strahlausbreitungsrichtung 44 positioniert. Die Detektoren 40.1 und 40.2 können (mindestens) zwei Strahldurchmesser entlang der Strahlausbreitung Richtung vermessen, um daraus die Strahlkaustik und aus dieser die Fokuslage zur Fokuslagenkorrektur zu ermitteln.

Wie in Figur 6 durch einen Doppelpfeil 48 angedeutet, ist der ortsauflösende Sensor oder Detektor 40 senkrecht zur Strahlausbreitungsrichtung 44 angeordnet und entlang dieser verschiebbar. Der Detektor 40 kann somit den Strahldurchmesser des Rückreflexes 30 entlang der Strahlausbreitungsrichtung 44 an einer Vielzahl von Positionen im Bereich des Fokus 20' des Rückreflexes 30 vermessen. Der Fokus 20' des Rückreflexes 30 entspricht dem Fokus 20 des Bearbeitungslaserstrahls 12. Durch die Vermessung des Rückreflexes 30 im Bereich seines Fokus 20' lässt sich somit die Strahlkaustik des Bearbeitungslaserstrahls 12 erfassen und zur Ermittlung und Korrektur der Fokuslage auswerten.

Gemäß Figur 7 ist bei einer anderen Ausgestaltung nicht der ortsauflösende Sensor oder Detektor 14, sondern der Umlenkspiegel 42 verschiebbar, wie durch den Doppelpfeil 48' angedeutet. Im Vergleich zur Ausgestaltung nach Figur 6 wird hier zwar eine größere Detektorfläche benötigt, jedoch ergibt sich ein kleinerer Verschiebeweg für den Umlenkspiegel 42, da eine Verschiebung des Umlenkspiegel 42 im Wesentlichen die doppelte relative Verschiebung des Sensors oder Detektors 14 entlang des Rückreflexes 30 in Strahlausbreitungsrichtung 44 zur Folge hat. Dadurch ergibt sich eine kompaktere Bauweise.

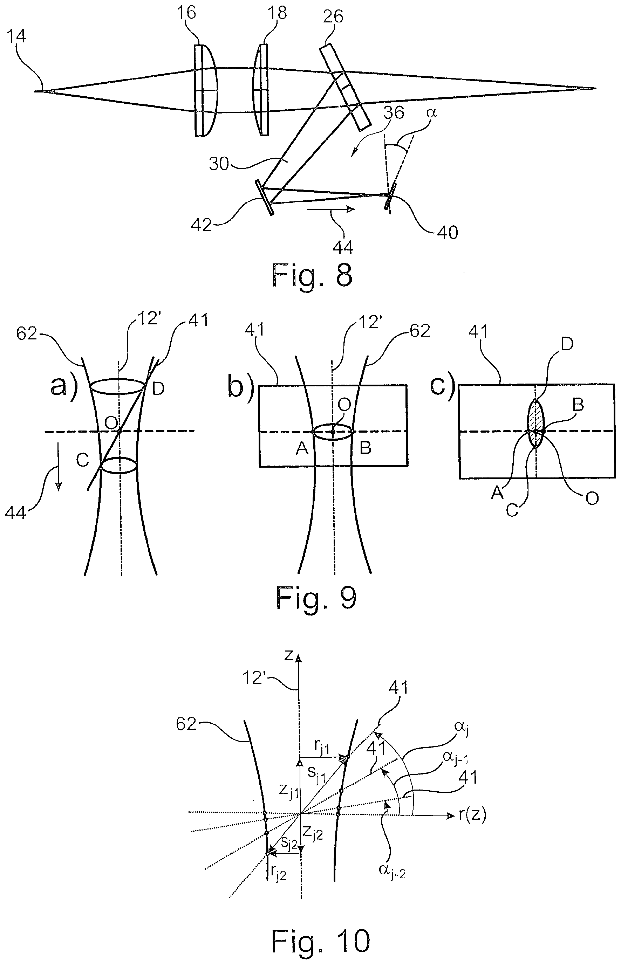

Figur 8 zeigt eine weitere Ausgestaltung, bei der der ortsauflösende Sensor oder Detektor 40 unter einem definierten Winkel $\alpha$ zur Strahlausbreitungsrichtung angeordnet ist.

Figur 9a zeigt einen Schnitt durch den als Strahlkaustik 62 dargestellten Rückreflex 30, der dem Bearbeitungslaserstrahl 12 entspricht, senkrecht zu einer Sensor- oder Kameraebene 41, während Figur 9b einen Schnitt durch die Strahlkaustik 62, der in Ausbreitungsrichtung 44 des Bearbeitungslaserstrahls 12 parallel zur Längserstreckung der Sensor- oder Kameraebene 41 verläuft, zusammen mit einer Draufsicht auf die Sensor- oder Kameraebene 41 des verkippten ortsauflösenden Sensor oder Detektor 40 zeigt. In der Figur 9c ist das elliptische Bild des gemessenen Strahls auf der Sensor- oder Kameraebene 41 dargestellt.

Die Vermessung des elliptischen Bildes des Strahls, also der Strahlkaustik 62 bei einem definierten Kippwinkel $\alpha$ ermöglicht die Berechnung des Strahldurchmesser an bis zu drei Positionen entlang der Strahlausbreitungsrichtung 44. Hierzu wird der Abstand AB im elliptischen Bild des gemessenen Strahls sowie die Abstände OC und OD entlang der langen Achse der Ellipse unter Berücksichtigung des Winkels $\alpha$ zwischen dem ortsauflösenden Sensor oder Detektor 40 und der Strahlachse 12' ausgewertet. Während die Strecke AB im elliptischen Bild des gemessenen Strahls direkt den Strahldurchmesser im Zentrum O der Sensor- oder Detektorebene 41 entspricht, können aus den Strecken OC und OD Strahldurchmesser berechnet werden, die an axial gegenüber dem Zentrum O entlang der Strahlachse versetzten Orten vorliegen. Der Abstand der Lage des Durchmesser in Richtung z der Strahlachse 12' ergibt sich dabei aus der folgenden Gleichung $z_1 = OD * \sin\alpha$, während sich der Durchmesser d wie folgt berechnet: $d = 2*r_1$, wobei $r_1 = OD * \cos\alpha$ ist.

Erfindungsgemäß erfolgt die Verdrehung oder Verkippung des ortsauflösenden Sensors oder Detektors 40 um jeweils definierte Winkel $\alpha_j$. In Abhängigkeit des Winkels $\alpha_j$ vermisst der ortsauflösende Sensor die Strecken $s_{j1}$ und $s_{j2}$, entsprechend den Abständen OD bzw. OC. Basierend darauf wird der entsprechende Strahlradius und somit der Strahldurchmesser in Abhängigkeit der z-Position ermittelt. Daraus ergeben sich bei j verschiedenen Winkeln mindestens $(2*j+1)$ verschiedene Ebenen der Strahlkaustik entlang der Strahlausbreitungsrichtung, in denen der Strahldurchmesser d zur näherungsweisen Ermittlung der Strahlkaustik 62 gemessen werden kann.

In Figur 10 ist die Anordnung der Sensor- oder Detektorebene 41 unter drei verschiedenen Winkeln schematisch dargestellt. Somit ergeben sich 7 verschiedene Strahldurchmesser d an sieben verschiedenen Orten $z_{j1}$, $z_{j2}$ entlang der Strahlachse 12' in z-Richtung. Die Durchmesser $d_{ji}$, $d_{j2}$ und die Orte $z_{j1}$, $z_{j2}$ lassen sich wie folgt berechnen.

$$d_{j1} = 2 * r_{j1} \text{ mit } r_{j1} = s_{j1} * \cos\alpha_j$$

$$z_{j1} = s_{j1} * \sin\alpha_j$$

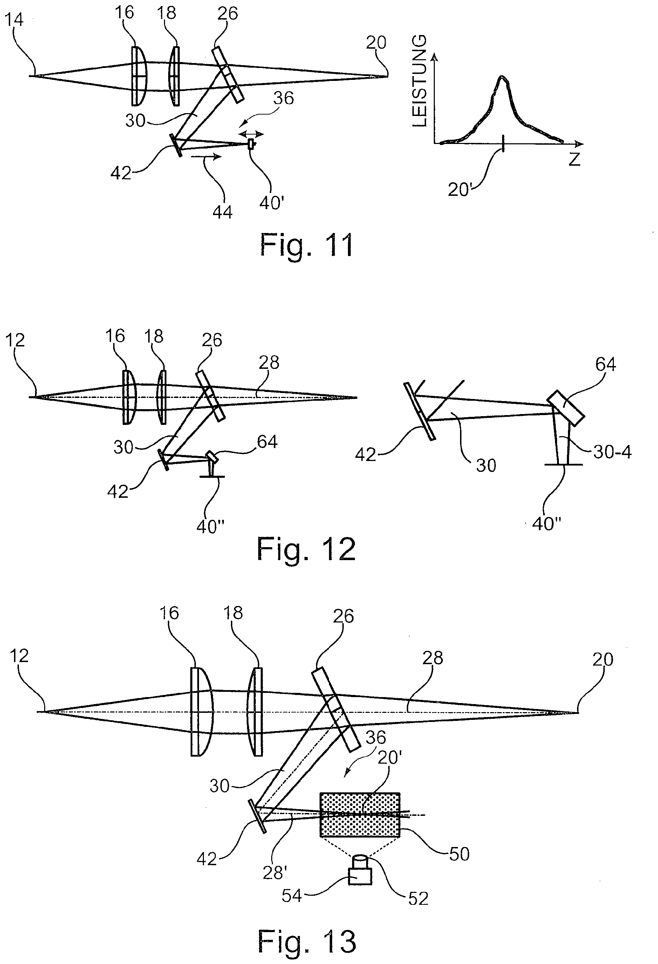

Wie in Figur 11 gezeigt, wird ein nicht-ortsauflösender Sensor oder Detektor 40', insbesondere ein Leistungsdetektor, wie z. B. eine Fotodiode verwendet, der in Ausbreitungsrichtung 44 des Rückreflexes 30 verschiebbar angeordnet ist, um die Intensität des Rückreflexes 30 nahe seiner Strahlachse zu messen. Die freie Öffnung dieses Sensors darf dabei nicht größer als der Strahldurchmesser d im Fokus 20' sein. Bei dieser Anordnung erreicht die gemessene Intensität oder Leistung auf dem Sensor ein Maximum im Fokus 20'. Durch eine Verschiebung des Sensors oder Detektors 40'entlang der optischen Achse kann die in dem Diagramm in Figur 11 gezeigte Intensitäts- oder Leistungsverteilung entlang der Ausbreitungsrichtung 44 gemessen werden, aus der dann die Fokuslage entsprechend dem Maximum der Verteilung ermittelt werden kann.

Wie in Figur 12 dargestellt ist, wird als Sensor oder Detektor ein Zeilensensor 40" zur Messung der Leistung im Rückreflex 30 verwendet, dem eine Vielzahl von Rückreflexen 30.n zugeführt werden, die von einem Umlenkelement 64 ausgehen. Das Umlenkelement 64 besteht dabei beispielsweise aus mehreren gestapelten Planplatten, so dass mit Hilfe mehrerer Flächen gleichzeitige eine Vielzahl von Rückreflexen 30.n bereitgestellt werden kann, von denen jeder einem Ort auf der Strahlachse zugeordnet werden kann. Die lineare Leistungsverteilung auf den Zeilensensor 40" korreliert dabei mit die Leistungsdichteverteilung entlang der optischen Achse 28, deren Maximum der Fokuslage entspricht, und kann deswegen für die Fokuslagenermittlung und -korrektur verwendet werden.

Figur 13 zeigt eine weitere Ausgestaltung, bei der der Rückreflex 30 so durch ein entlang seiner optischen Achse 28' angeordnetes Streumedium 50 gelenkt wird, dass sein Fokus 20' im Bereich des Streumediums 50 liegt und die Strahlkaustik im Bereich des Fokus 20' zur Fokuslagenermittlung und -korrektur beobachtet werden kann. Die Beobachtung der Strahlkaustik erfolgt dabei mit Hilfe einer Abbildungsoptik 52, die vom Rückreflex 30 ausgehendes Streulicht auf ein Detektor 54 abbildet.

Der Detektor 54 kann dabei ein ortsauflösender Sensor z. B. ein CCD sein, der die Strahlkaustik aufnimmt, aus der die Fokuslage bestimmt werden kann. Es ist aber auch denkbar einen Zeilensensor zur Vermessung der Streulichtleistung zur Ermittlung der Fokuslage einzusetzen, der den Verlauf der Streulichtintensität oder -leistung entlang der Strahlausbreitungsrichtung erfasst. Das Maximum des Verlaufs der Streulichtintensität oder -leistung gibt dann die Fokuslage an.

Die Abbildungsoptik 52 kann z. B. eine elliptische Kavität, ein parabolischer Reflektor, oder dergleichen sein.

Als Streumedium 50 wird vorteilhafter Weise ein festes durchsichtiges Material mit homogen darin verteilten Streuelementen, wie z. B. kleinen Partikeln verwendet. Durch die Verbesserung in der Herstellung von Partikeln im Submikrometerbereich ist es heutzutage möglich feste Materialien mit einer sehr hohen Transmission herzustellen und einzusetzen, die sehr homogen und effizient das Licht für Beleuchtungszwecke streuen können. Dies hat den Vorteil, dass Messartefakte durch Staubteilchen unkritisch sind. Alternativen zu dieser Ausgestaltung des Streumediums sind bewegliche Elemente, wie eine Streuwand entlang der optischen Achse oder ein rotierender Ventilator.

**Patentansprüche**

1. Laserbearbeitungskopf zum Führen eines Bearbeitungslaserstrahls (12) mit einer Vorrichtung zur Erfassung einer Fokuslage des Bearbeitungslaserstrahls, die Vorrichtung umfassend:

    - ein im zum Fokus (20) hin konvergierenden Bearbeitungslaserstrahl (12) angeordnetes optisches Element (26) zum Auskoppeln zumindest eines Rückreflexes (30) aus dem Laserstrahlengang, und

    - eine Sensoranordnung (36) zur Erfassung von Strahleigenschaften des Bearbeitungslaserstrahls (12) im Bereich des Fokus (20) entlang seiner Ausbreitungsrichtung, die eingerichtet ist, den ausgekoppelten Rückreflex (30) des Bearbeitungslaserstrahls (12) zur Bestimmung der aktuellen Fokuslage an mindestens zwei entlang der Ausbreitungsrichtung zueinander versetzten Orten zu vermessen,

    **dadurch gekennzeichnet, dass** die Sensoranordnung (36) zumindest einen ortsauflösenden Detektor (40) aufweist, der in eine Mehrzahl von um jeweils definierte Winkel ($\alpha_j$) gegen die Ausbreitungsrichtung (44) des Rückreflexes (30) geneigten Stellungen bewegbar ist, um den Strahldurchmesser des Rückreflexes (30) an einer Mehrzahl von entlang der Ausbreitungsrichtung zueinander versetzten Orten zu erfassen.

2. Verfahren zur Erfassung einer Fokuslage eines Bearbeitungslaserstrahls (12) in einem Laserbearbeitungskopf (10) mit folgenden Schritten:

- Auskoppeln zumindest eines Rückreflexes (30) aus dem Laserstrahlengang mittels eines im zum Fokus (20) hin konvergierenden Bearbeitungslaserstrahl (12) angeordneten optischen Elements (26),
- Erfassen von Strahleigenschaften des Bearbeitungslaserstrahls (12) im Bereich des Fokus (20) entlang seiner Ausbreitungsrichtung mittels einer Sensoranordnung (36), wobei als eine Strahleigenschaft des Bearbeitungslaserstrahls (12) der Strahldurchmesser des Rückreflexes (30) erfasst wird, und
- Vermessen des ausgekoppelten Rückreflexes (30) des Bearbeitungslaserstrahls (12) zur Bestimmung der aktuellen Fokuslage an mindestens zwei entlang der Ausbreitungsrichtung zueinander versetzten Orten,
**dadurch gekennzeichnet, dass** ein ortsauflösender Detektor (40) der Sensoranordnung (36) in eine Mehrzahl von um jeweils definierte Winkel ($\alpha_j$) gegen die Ausbreitungsrichtung (44) des Rückreflexes (30) geneigten Stellungen bewegt wird, um den Strahldurchmesser des Rückreflexes an einer Mehrzahl von entlang der Ausbreitungsrichtung zueinander versetzten Orten zu erfassen.

**Claims**

1. A laser machining head for guiding a machining laser beam (12) with a device for detecting a focal position of said machining laser beam, wherein the device comprises:

- an optical element (26) arranged in said machining laser beam (12) converging towards the focus (20) for decoupling at least one back reflection (30) from the laser beam path, and
- a sensor arrangement (36) for detecting beam properties of said machining laser beam (12) in the region of said focus (20) along the direction of propagation thereof, said sensor arrangement being arranged to measure the decoupled back reflection (30) of said machining laser beam (12) at at least two locations offset from each other along the direction of propagation for determining the current focal position,
**characterized in that** said sensor arrangement (36) includes at least one spatially resolving detector (40) which is movable into a plurality of positions inclined by respectively defined angles ($\alpha_j$) with respect to the beam propagation direction (44) of the back reflection (30) in order to detect the beam diameter of the back reflection (30) at a plurality of locations offset from one another along the direction of propagation.

2. A method for detecting a focal position of a machining laser beam (12) in a laser machining head (10), comprising the following steps:

- decoupling at least one back reflection (30) from the laser beam path by means of an optical element (26) arranged in said machining laser beam (12) converging towards the focus (20),
- detecting beam properties of said machining laser beam (12) in the region of said focus (20) along the direction of propagation thereof by means of a sensor arrangement (36), wherein the beam diameter of the back reflection (30) is detected as a beam property of the machining laser beam (12), and
- measuring the decoupled back reflection (30) of said machining laser beam (12) for determining the current focal position at at least two locations offset from one another along the direction of propagation,
**characterized in that** a spatially resolving detector (40) of said sensor arrangement (36) is moved into a plurality of positions inclined by respectively defined angles ($\alpha_j$) with respect to the beam propagation direction (44) of the back reflection (30) in order to detect the beam diameter of the back reflection at a plurality of locations offset from one another along the direction of propagation.

**Revendications**

1. Tête d'usinage laser pour guider un faisceau laser d'usinage (12) en utilisant un dispositif pour détecter une position focale du faisceau laser d'usinage, le dispositif comportant :

- un élément optique (26) agencé dans le faisceau laser d'usinage (12) convergeant vers le foyer (20) pour découpler au moins une réflexion arrière (30) du trajet de faisceau laser, et
- un agencement de capteurs (36) pour détecter des propriétés de faisceau du faisceau laser d'usinage (12) dans la zone du foyer (20) le long de sa direction de propagation, lequel agencement de capteurs est conçu pour mesurer la réflexion arrière (30) découplée du faisceau laser d'usinage (12) afin de déterminer la position focale actuelle à au moins deux emplacements décalés l'un par rapport à l'autre le long de la direction de propagation, **caractérisée en ce que** l'agencement de capteurs (36) comporte au moins un détecteur à résolution spatiale (40) qui peut être déplacé dans une pluralité de positions inclinées d'angles ($\alpha_j$) respectivement définis par rapport à la direction de propagation (44) de la réflexion arrière (30), afin de détecter le diamètre de faisceau de la réflexion arrière (30) à une pluralité d'emplacements décalés les uns par rapport aux autres le long de la direction de propagation.

2.  Procédé pour détecter une position focale d'un faisceau laser d'usinage (12) dans une tête d'usinage laser (10), comportant les étapes suivantes consistant à :

    - découpler au moins une réflexion arrière (30) du trajet de faisceau laser au moyen d'un élément optique (26) agencé dans le faisceau laser d'usinage (12) convergeant vers le foyer (20),
    - détecter des propriétés de faisceau du faisceau laser d'usinage (12) dans la zone du foyer (20) le long de sa direction de propagation au moyen d'un agencement de capteurs (36), dans lequel le diamètre de faisceau de la réflexion arrière (30) est détecté comme étant une propriété de faisceau du faisceau laser d'usinage (12), et
    - mesurer la réflexion arrière (30) découplée du faisceau laser d'usinage (12) pour déterminer la position focale actuelle à au moins deux emplacements décalés l'un rapport à l'autre le long de la direction de propagation, **caractérisé en ce qu'**un détecteur à résolution spatiale (40) de l'agencement de capteurs (36) est déplacé dans une pluralité de positions inclinées d'angles ($\alpha_j$) respectivement définis par rapport à la direction de propagation (44) de la flexion de fond (30), afin de détecter le diamètre de faisceau de la réflexion de fond à une pluralité d'emplacements décalés les uns par rapport aux autres le long de la direction de propagation.

Fig. 1

Fig. 2

Fig. 3

Fig. 4

16  18  26  12  20

14

30  46  36

42  40.1

40.2  40

## Fig. 5

16  18  26  12  20

14

30  48

42  40

20'

## Fig. 6

16  18  26  12  20

14

48'  44

42  40

20'

## Fig. 7

Fig. 8

Fig. 9

Fig. 10

Fig. 11

Fig. 12

Fig. 13

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2000094173 A
- DE 102015106618 B4
- DE 102011054941 B3
- DE 102011007176 A1
- DE 19630607 C1
- DE 102010039633 A1
- US 8988673 B2
- DE 102015001421 A1
- US 5459565 A
- WO 2012021311 A2
- DE 4426931 C1
- EP 2952861 A1